Europäisches Patentamt

European Patent Office

Office européen des brevets

(19)

(11) Publication number: **0 103 431**
A1

(12) **EUROPEAN PATENT APPLICATION**

(21) Application number: 83304886.1

(22) Date of filing: 24.08.83

(51) Int. Cl.³: **F 16 K 31/363**

(30) Priority: 26.08.82 GB 8224468

(43) Date of publication of application: 21.03.84
Bulletin 84/12

(84) Designated Contracting States: **BE DE FR GB IT NL SE**

(71) Applicant: **BENDIX LIMITED, Douglas Road, Kingswood,
Bristol BS15 2NL (GB)**

(72) Inventor: **Christmas, Michael, 2 Bellvue Road, St. George
Bristol BS5 7PG (GB)**

(74) Representative: **Turner, Alan Reginald, BENDIX LIMITED
Douglas Road, Kingswood, Bristol BS15 2NL (GB)**

(54) **Improvements to fluid flow control.**

(57) A lubricating oil flow restricting valve for engine driven air
compressors has an oil flow restriction (14) carried by a piston
(6) with two interconnected pressure responsive areas (7, 8)
communicating with an output port (4) and such that when oil
pressure is applied to an input port (3) the piston is driven
against a seat to close off a bypass path and leave a flow from
the input port to the output port via the restriction.

EP 0 103 431 A1

0103431

Improvements to Fluid Flow Control

This invention relates to fluid flow restricting especially but not exclusively to lubricant flow restricting valves/machines.

Engine-driven air compressor employed on vehicles to charge reservoirs of braking systems are required to operate over a wide range of temperature conditions and the flow of oil from the engine oil pump to the bearings of such a machine can, therefore, vary between an excessively high value under hot running conditions when viscosity of the lubricant is low to near frost temperature when running up from cold when the viscosity of the lubricant is high. Whilst it has been proposed furthermore to employ a simple choke restriction to limit hot oil flow to a compressor such a choke can also occassionally become blocked.

The inventions provides a fluid flow restricting valve having a restriction in a flow path between an input port and an output port and characterised by a fluid pressure responsive member having opposing differential pressure responsive areas connected via a passage, the smaller area being subject to pressure at the output port and the pressure responsive member acting in a sense to close a bypass path between said ports.

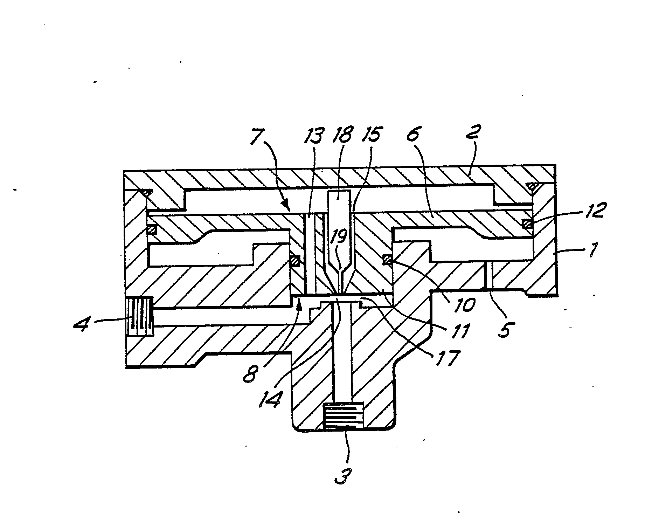

In order that the invention may be more clearly understood and readily carried into effect, the same will be further described by way of example with reference to the accompanying drawing which illustrates in sectional diagrammatic form a lubricant flow control valve assembly.

Referring to the drawing, the assembly comprises a generally cylindrical housing 1 with a top cover 2 attached by screws (not shown) and the housing having an input port 3 an output port 4 and a vent port 5. A fluid pressure responsive member in the form of a piston 6 has an upper relatively large area 7 bounded by an 'O' ring seal 12 and a lower relatively smaller area 8 bounded by a sliding 'O' ring seal 10 on a central stem 11. A passage 13 extends between these two areas and a centrally disposed restriction 14 is provided in a further such passage 15, an annular upstand 17 being provided in the lower part of the housing against which the area 8 is engageable around the restriction 14.

Although not essential, in order to reduce the possibility of the restriction 14 becoming blocked, a small float 18 has a pin 19 which acts to clear the restriction each time the assembly moves upwards.

In operation of the flow restricting valve it may be assumed to be connected in the oil flow path between the oil pump of an engine and the lubrication channels of an air compressor driven by the engine. The oil flows in at port 3 from the oil pump and out at port 4 to the compressor bearings. After stopping of the engine and subsequent cooling from a heated condition, oil may tend
to run away from the region facing area 7.  Upon starting
from cold oil pressure acting via port 3 will act on
the area 8.  Since the viscosity of the oil in passages
13 and 15 creates a pressure difference across them they
tend to inhibit initial flow to the area 7 and the
pressure acting on 8 thus tends briefly to hold member
6 up whereby oil flow can take place from 3 via the bypass
flow path provided between 8 and seat 17 to output port
4.  This ensures immediate oil flow to the bearings of
the compressor on start up from cold.

As the pressures quickly equalise on areas 7 and 8 and
because area 7 is larger than area 8 the member 1 is
driven downwards to engage the upstand 17 and the oil
flow is then constrained to pass upwards through
restriction 14 and passage 15 and downwards via passage
13 to port 4.  This oil flow has the effect of moving
the needle 19 out of the restriction 14.

The size of restriction 14 is chosen suitably to limit
to a minimum safe rate the flow of lubricant to the
compressor whereby excessive oil is not allowed to reach
the cylinder bores to be transmitted to the compressed air.
The restriction 14 is cleared of any slight blockage by
needle 19 each time the piston moves upwards.  In the event
of restriction 14 becoming temporary blocked moreover
oil flow is then permitted by the bypass action which
will result from the lifting pf the piston to allow some
oil flow to the bearings but this oil flow would be less precisely metered than before.

If the underside of the member 1 which is vented by passage 5 is arranged to communicate with the compressor sump or engine sump and the piston 6 is a good sliding fit in the bore of the housing 1 'O' ring 12 may be dispensed with. Similarly, if the stem 11 is a reasonably good sliding fit the 'O' ring 10 may be dispensed with. This may be readily brought about when integrating the valve assembly housing into the engine or compressor crankcase.

A. R. TURNER
AGENT FOR THE APPLICANT

0103431

Claims:-

1.     A fluid flow restricting valve having a restriction
(14) in a flow path between an input port (3) and an output
port (4) and characterised by a fluid pressure responsive
member (6) having opposing differential pressure respon-
sivee areas (7, 8) connected via a passage (13), the
smaller area (8) being subject to pressure at the output
port and the pressure responsive member acting in a sense
to close a bypass path between said ports.

2.     A fluid flow restricting valve as claimed in claim
1 characterised by the pressure responsive member comprising a piston with a central stem the end of which carries
the smaller area (8), said stem also carrying said
restriction in a further passage (15) between said areas and
being moveable against a seat (17) to close the bypass
path between said ports.

3.     A fluid flow restricting valve as claimed in claim
2 characterised by said passage 13 being formed in the
pressure responsive member.

4.     A fluid flow restricting valve as claimed in claims
2 or 3 characterised by a needle (19) moveable into the
restriction upon movement of the piston in the direction
to open the bypass.

5.     An oil flow limiting valve substantially as described
herein with reference to the single figure of the
accompanying drawing.

Bendix Limited
Douglas Roaad
Kingswood, BRISTOL. BS15 2NL

Our Ref: K.172.

0103431

## European Patent Office
## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-C-1 033 469 (RICCI) <br> * Entire document * | 1-3 | F 16 K 31/363 |
| A | DE-A-1 901 861 (RAUFOSS) | | |

TECHNICAL FIELDS SEARCHED (Int. Cl. ³)

F 16 K 31/00

The present search report has been drawn up for all claims

| Place of search | Date of completion of the search | Examiner |
|---|---|---|
| BERLIN | 25-11-1983 | LUDWIG H J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82